# EUROPEAN PATENT APPLICATION

(11) **EP 4 289 655 A1**
(43) Date of publication of application: **13.12.2023**
(21) Application number: 22919343.8
(22) Date of filing: 11.01.2022
(51) Int. Cl.: B60L 50/60, B60L 50/50, B62D 25/20, B60K 1/04

(54) **VEHICLE BODY CONNECTING ASSEMBLY AND VEHICLE**

(71) Applicant: Contemporary Amperex Technology Co., Limited, Ningde, Fujian 352100 (CN)
(72) Inventor: SUN, Xiaowei, Ningde, Fujian 352100 (CN); WU, Kai, Ningde, Fujian 352100 (CN); JIANG, Liwen, Ningde, Fujian 352100 (CN)
(74) Representative: Ziebig Hengelhaupt Intellectual Property Attorneys Patentanwaltskanzlei PartGmbB
(86) International application number: PCT/CN2022/071279
(87) International publication number: WO 2023/133677

(57) **Abstract**

A body connection assembly and a vehicle are disclosed. The body connection assembly includes: a floor panel (1), including a conduit (11); a rocker rail (2), located on one side of the floor panel (1) along a first direction (x), where the rocker rail (2) is configured to be connected to a body; a mounting side rail (3), connected to a side of the rocker rail (2), the side being close to the floor panel (1); and a battery (100), at least partially located below the floor panel (1) and mounted on a side of the mounting side rail (3) along the first direction (x), the side being away from the rocker rail (2). The battery (100) includes a box assembly (101). The box assembly (101) includes an upper box (101A). The upper box (101A) closes the conduit (11).

## Description

### TECHNICAL FIELD

This application relates to the technical field of vehicle structures, and in particular, to a body connection assembly and a vehicle.

### BACKGROUND

Due to advantages such as a high energy density, a high power density, reusability for many cycles, and a long shelf life, batteries such as a lithium-ion battery have been widely used in electric vehicles.

However, a battery currently takes up much space when mounted in an electric vehicle.

### SUMMARY

An objective of this application is to reduce space occupied by a battery mounted in an electric vehicle.

According to a first aspect of this application, a body connection assembly is provided, including:
a floor panel, including a conduit;
a rocker rail, located on one side of the floor panel along a first direction, where the rocker rail is configured to be connected to a body;
a mounting side rail, connected to a side of the rocker rail, the side being close to the floor panel; and
a battery, at least partially located below the floor panel and mounted on a side of the mounting side rail along the first direction, the side being away from the rocker rail, where the battery includes a box assembly, the box assembly includes an upper box, and the upper box closes the conduit.

The body connection assembly in an embodiment of this application closes the conduit on the floor panel through the top wall of the upper box of the battery, and uses the top wall of the upper box as a part of the floor panel, thereby reducing the space occupied by the battery in a height direction during mounting of the battery on the basis of ensuring the integrity of the floor panel, facilitating mounting of a thicker battery, and in turn, increasing the energy density of the battery to increase the endurance time of the vehicle, or, vacating space for other components to be mounted in the vehicle, reducing the difficulty of layout in the vehicle, and making the body connection assembly more lightweight.

In some embodiments, both the rocker rail and the mounting side rail extend along a second direction, and the second direction is perpendicular to the first direction.

In such embodiments, the rocker rail is caused to extend along the second direction, thereby improving the structural stability of the floor panel along a length direction of the vehicle, and in turn, making the vehicle structure more stable. Moreover, the mounting side rail also extends along the second direction, thereby vacating more space for the battery in the first direction.

In some embodiments, hermeticity is implemented between a part close to the floor panel on the rocker rail and the mounting side rail.

In such embodiments, it is considered that the battery mounting method gives rise to a first clearance between the battery and the conduit as well as a second clearance between the part close to the floor panel on the rocker rail and the mounting side rail. Consequently, impurities, foreign matters, and moisture in the vehicle are prone to pass through the first clearance and the second clearance and reach a side of the mounting side rail, the side being away from the battery. The hermeticity implemented between the part close to the floor panel on the rocker rail and the mounting side rail can eliminate the second clearance to prevent impurities or foreign matters in the vehicle from entering the space between the rocker rail and the mounting side rail, avoid damage or corrosion to structural members, and increase the lifespan of the vehicle. Moreover, this also prevents impurities or moisture between the rocker rail and the mounting side rail from entering a mounting region of the battery through the second clearance, thereby improving the reliability and safety of the battery in operation.

In some embodiments, the rocker rail includes a first body portion and a lap-joint portion. The lap-joint portion is connected to a side of the first body portion along the first direction, the side being close to the battery.

The mounting side rail includes a second body portion and an extension portion. The extension portion is connected to a side of the first body portion along the first direction, the side being away from the battery.

The first body portion is connected to the extension portion. The lap-joint portion is located above the second body portion. Hermeticity is implemented between the lap-joint portion and the second body portion.

In such embodiments, the rocker rail and the mounting side rail are connected together, thereby increasing the overall structural rigidity, mounting the battery more firmly, preventing deformation of the mounting side rail that causes displacement or tilt of the battery, and helping to ensure the integrity of the floor panel. Moreover, such a connection structure between the rocker rail and the mounting side rail can reduce the space occupied by the rocker rail and the mounting side rail in the first direction, so as to increase the space available for mounting the battery. In addition, the lap-joint portion covers the second body portion so that a support is formed between the lap-joint portion and the second body portion to further increase the overall structural rigidity and prevent deformation of the rocker rail and the mounting side rail. In this way, the region above the floor panel in the vehicle can be isolated from the region between the rocker rail and the mounting side rail to prevent foreign matters, impurities, or moisture in the vehicle from entering the body connection assembly.

In some embodiments, the body connection assembly further includes a sealing element. The sealing element is disposed between the lap-joint portion and the second body portion and is configured to implement hermeticity between the lap-joint portion and the second body portion.

In such embodiments, a sealing element is disposed between the lap-joint portion and the second body portion to strengthen the hermeticity of the connection between the rocker rail and the mounting side rail, and prevent the impurities or foreign matters in the vehicle from entering the space between the rocker rail and the mounting side rail, thereby avoiding damage or corrosion to the structural members and increasing the lifespan of the vehicle. Moreover, this also prevents impurities or moisture between the rocker rail and the mounting side rail from entering a mounting region of the battery through the second clearance, thereby improving the reliability and safety of the battery in operation. In addition, the hermeticity implemented by the sealing element facilitates assembling, ensures a good sealing effect, and ensures consistency of assembling for different body connection assemblies.

In some embodiments, the sealing element includes a sealing plate, a first protruding portion, and a second protruding portion. Both the rocker rail and the mounting side rail extend along a second direction, and the second direction is perpendicular to the first direction. The first protruding portion and the second protruding portion are disposed on two sides of the sealing plate respectively along a third direction, and the third direction is perpendicular to the first direction and the second direction.

A first recessed portion and a second recessed portion are created on a surface of the lap-joint portion and an opposite surface of the second body portion respectively. The first protruding portion is embedded in the first recessed portion, and the second protruding portion is embedded in the second recessed portion.

In such embodiments, the two sides of the sealing element along the third direction are in concave-convex fit with the rocker rail and the mounting side rail respectively, thereby increasing a path of sealing between the lap-joint portion and the second body portion, and optimizing the sealing effect. Moreover, such a fit structure plays a role of connecting the lap-joint portion and the second body portion. When the body connection assembly is subjected to vibration or impact, the concave-convex fit structure between the sealing element and the lap-joint portion and the second body portion can restrict reciprocal displacement between the rocker rail and the mounting side rail along the first direction, and increase the overall rigidity. In addition, the sealing element can also serve to absorb vibration.

In some embodiments, the sealing element includes a plurality of first protruding portions and a plurality of second protruding portions. The plurality of first protruding portions are staggered from the plurality of second protruding portions along the first direction.

In such embodiments, the plurality of first protruding portions and the plurality of second protruding portions are disposed on the sealing element, and the plurality of first protruding portions are staggered from the plurality of second protruding portions along the first direction. In this way, the degree of hermeticity of the sealing element is more uniform along the entire sealing length, and the sealing element is connected to the lap-joint portion and the second body portion more firmly, thereby improving the reliability of the hermetic connection between the rocker rail and the mounting side rail.

In some embodiments, an extension direction of the sealing element is consistent with the rocker rail and the mounting side rail, and an extension length of the sealing element covers an entire length of a fit between the lap-joint portion and the second body portion.

In such embodiments, the extension length of the sealing element along the second direction is consistent with the length of the fit between the lap-joint portion and the second body portion, thereby improving the sealing performance along the entire length of the fit between the rocker rail and the mounting side rail, and in turn, ensuring a good overall sealing effect.

In some embodiments, the lap-joint portion retracts by a preset distance along the first direction relative to the second body portion, and a region of the retraction is coated with a sealant.

In such embodiments, the region of the retraction of the lap-joint portion relative to the second body portion is coated with a sealant, thereby further ensuring airtightness and water-tightness of a joint between the rocker rail and the mounting side rail at a position close to the battery. This can reliably prevent the impurities or foreign matters in the vehicle from entering the space between the rocker rail and the mounting side rail, avoid damage or corrosion to the structural members, and increase the lifespan of the vehicle. In addition, this also enables the rocker rail to be connected to the mounting side rail at a position close to an end portion, thereby improving the overall connection rigidity.

In some embodiments, the rocker rail includes a first body portion and a lap-joint portion. The lap-joint portion is connected to a side of the first body portion along the first direction, the side being close to the battery. The mounting side rail includes a second body portion and an extension portion. The extension portion is connected to a side of the second body portion along the first direction, the side being away from the battery. The first body portion is detachably connected to the extension portion.

In such embodiments, on the basis of a lap joint between the lap-joint portion and the second body portion, the first body portion is also detachably connected to the extension portion, thereby increasing the rigidity of connection between the rocker rail and the mounting side rail, increasing the overall bending rigidity and bending modes, and making the body connection structure more resistant to vibration and impact. Moreover, the first body portion is detachably connected to the extension portion, thereby facilitating the replacement and maintenance of a single component in the rocker rail and the mounting side rail and facilitating the assembling.

In some embodiments, the body connection assembly further includes a nut plate and a plurality of fasteners. A cavity is created at a position close to the extension portion on the first body portion. The nut plate is disposed in the cavity. Both the rocker rail and the mounting side rail extend along a second direction, and the second direction is perpendicular to the first direction. A plurality of mounting holes are created at intervals on both the extension portion and the first body portion along the second direction. The nut plate includes a plurality of nut interfaces arranged at intervals along the second direction. The fasteners pass through the mounting holes on the extension portion and the first body portion successively to get connected to the corresponding nut interfaces.

In such embodiments, the rocker rail is detachably connected to the mounting side rail by the fasteners, thereby improving the convenience of assembling or disassembling, and ensuring high strength of connection between the rocker rail and the mounting side rail.

In some embodiments, a concave-convex fit structure is disposed between the first body portion and the extension portion, and the first body portion and the extension portion are connected together at the concave-convex fit structure.

In such embodiments, a concave-convex fit structure is disposed between the first body portion and the extension portion, so that the first body portion is staggered from the extension portion, thereby increasing the overall bending rigidity and bending modes after the rocker rail is connected to the mounting side rail.

In some embodiments, a bonding layer is disposed at a joint between the first body portion and the extension portion.

In such embodiments, the bonding layer is disposed at the joint between the first body portion and the extension portion, thereby preventing displacement between the rocker rail and the mounting side rail during the mounting of the fasteners, improving the reliability of connection between the first body portion and the extension portion, and improving the hermeticity of the connection.

According to a second aspect of this application, a vehicle is provided, including: a body and the body connection assembly according to the foregoing embodiment. The body is connected to a top of the rocker rail.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a battery mounted in a vehicle according to this application;
FIG. 2 is an exploded view of a battery according to some embodiments of this application;
FIG. 3 is a schematic structural diagram of a body connection assembly according to some embodiments of this application;
FIG. 4 is a schematic structural diagram of connection between a rocker rail and a mounting side rail according to some embodiments of this application;
FIG. 5 is a schematic structural diagram of a rocker rail according to some embodiments;
FIG. 6 is a schematic structural diagram of a mounting side rail according to some embodiments;
FIG. 7 is a schematic structural diagram of a sealing element according to some embodiments; and
FIG. 8 is a schematic structural diagram of a gasket according to some embodiments.

The drawings are not drawn to scale.

List of reference numerals:
1. floor panel; 11. conduit; 2. rocker rail; 21.first body portion; 211. third protruding portion; 212. cavity; 22. lap-joint; 221. first recessed portion; 3. mounting side rail; 31. second body portion; 311. second recessed portion; 32. extension portion; 321. third recessed portion; 322. mounting hole; 4. sealing element; 41. sealing plate; 42. first protruding portion; 43. second protruding portion; 5. sealant; 6. nut plate; 61. base plate; 62. nut interface; 7. fastener; 8. gasket; 81. through-hole; 9. bonding layer;
100. battery; 101. box assembly; 101A. upper box; 101B. lower box; 100'. battery module; 10. battery cell;
200. vehicle; 201. axle; 202. wheel; 203. motor; 204. controller.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction or constructed or operated in the specified direction. Therefore, such terms are not to be understood as a limitation on this application.

In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range. The directional terms appearing in the following description indicate the directions shown in the drawings, but are not intended to limit specific structures in this application.

In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

Reference to an "embodiment" herein means that a specific feature, structure or characteristic described with reference to this embodiment may be included in at least some embodiments of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "a plurality of" means two or more (including two). Similarly, "a plurality of groups" means two or more groups (including two groups), and "a plurality of pieces" means two or more pieces (including two pieces).

A direction or a positional relationship described herein by using the terms such as "up", "down", "top", "bottom", "front", "back", "in", or "out" is merely intended for ease of describing this application, but does not indicate or imply that the described device is necessarily located in the specified direction or constructed or operated in the specified direction, and therefore, is not to be understood as a limitation on the protection scope of this application.

The battery mentioned in embodiments of this application means a unitary physical module that includes a plurality of battery cells to provide a higher voltage and a higher capacity. For example, the battery mentioned in this application may include a battery module, a battery pack, or the like.

A battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The embodiments of this application do not limit the shape of the battery cell. Depending on the form of packaging, the battery cell is typically classed into three types: cylindrical battery cell, prismatic battery cell, and pouch-type battery cell. The embodiments of this application do not limit the type of the battery cell.

The inventor has found through research that, in a conventional process of mounting a battery in a vehicle, a rocker rail is generally welded to a floor panel, and the body is connected to the top of the rocker rail. The floor panel is an integrated structure. A battery as a whole is disposed below the floor panel, and is mounted on a mounting rail located on one side of the rocker rail. Therefore, the battery takes up a relatively large dimension in the vertical direction during the mounting. Moreover, at a part close to the floor panel, the mounting rail is independent of the rocker rail. The reliability of the battery mounting depends on the strength of the mounting rail, so that a relatively high requirement is imposed on the strength of the mounting rail.

For this mounting manner, the top wall of the battery box, the distance between the box and the floor panel, and the thickness of the floor panel all occupy the space in the vertical direction. Consequently, the battery needs to occupy a relatively large space in the vertical direction during mounting. To reduce the space occupied by the battery in the vertical direction and facilitate mounting of a thicker battery or vacate a space for accommodating other components, the inventor breaks through the conventional way of thinking and comes up with an idea of using the top wall of the battery box as a part of the floor panel. In this way, the location of the battery saves a space equivalent to the thickness of the floor panel plus the distance between the box and the floor panel.

Based on this idea, this application is put forward to improve a body connection assembly. The body connection assembly includes: a floor panel, a rocker rail, a mounting side rail, and a battery. The floor panel includes a conduit. The rocker rail is located on one side of the floor panel along a first direction. The rocker rail is configured to be connected to a body. The mounting side rail is connected to a side of the rocker rail, the side being close to the floor panel. The battery is at least partially located below the floor panel and mounted on a side of the mounting side rail along the first direction, the side being away from the rocker rail. The battery includes a box. The box includes an upper box. The upper box closes the conduit.

This body connection assembly closes the conduit on the floor panel through the top wall of the upper box of the battery, thereby reducing the space occupied by the battery in a height direction during mounting of the battery, facilitating mounting of a thicker battery, and in turn, increasing the energy density of the battery to increase the endurance time of the vehicle, or, vacating space for other components to be mounted in the vehicle, and reducing the difficulty of layout in the vehicle.

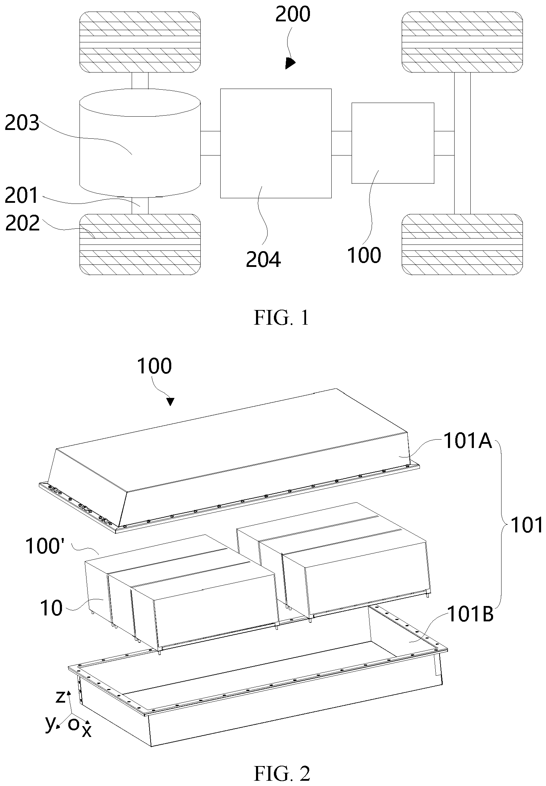

As shown in FIG. 1, the electrical device may be a vehicle 200 such as a new energy vehicle. The new energy vehicle may be a battery electric vehicle, a hybrid electric vehicle, a range-extended electric vehicle, or the like. Alternatively, the electrical device may be an unmanned aerial vehicle, a ship, or the like. Specifically, the vehicle 200 may include an axle 201, wheels 202 connected to the axle 201, a motor 203, a controller 204, and a battery 100. The motor 203 is configured to drive the axle 201 to rotate. The controller 204 is configured to control the motor 203 to operate. The battery 100 may be disposed at the bottom, head, or rear of the vehicle 200, and configured to provide electrical energy for the operation of the motor 203 and other components in the vehicle.

Further, the vehicle 200 may further include: a body and the body connection assembly according to the foregoing embodiment. The body is connected to a top of the rocker rail.

FIG. 2 is a schematic structural diagram of a battery 100 according to some embodiments of this application. The battery 100 includes a box assembly 101 and a battery cell 10. There may be one or more battery cells 10 in the battery 100. If there are a plurality of battery cells 10, the plurality of battery cells 10 may be connected in series, parallel, or series-and-parallel pattern. The series-and-parallel pattern means a combination of series connection and parallel connection of the plurality of battery cells 10. The plurality of battery cells 10 may be connected in series, parallel, or series-and-parallel pattern to form a battery module first, and then a plurality of battery modules are connected in series, parallel, or series-and-parallel pattern to form a whole for being accommodated in the box assembly 101. Alternatively, all battery cells 10 are directly connected in series, parallel, or series-and-parallel pattern, and then the entirety of all battery cells 10 is accommodated in the box assembly 101.

The box assembly 101 is hollow inside. At least one battery module 100' is accommodated in the box assembly 101. For example, the box assembly 101 may include an upper box 101A and a lower box 101B. The upper box 101A and the lower box 101B are snap-fitted together. For example, both the upper box 101A and the lower box 101B are a hollow cuboid, and each include only one opened surface. The opening of the upper box 101A is disposed opposite to the opening of the lower box 101B. The upper box 101A is snap-fitted to the lower box 101B to form a box with a closed cavity. Alternatively, the upper box 101A is a cuboid with an opening, and the lower box 101B is a plate; or, the lower box 101B is a cuboid with an opening, and the upper box 101A is a plate. The upper box 101A and the lower box 101B are disposed opposite to each other and snapped together to form a box with a closed cavity. The at least one battery modules 100' are combined by being connected in parallel, series, or series-and-parallel pattern, and then placed into the closed cavity formed by snapping the upper box 101A and the lower box 101B together.

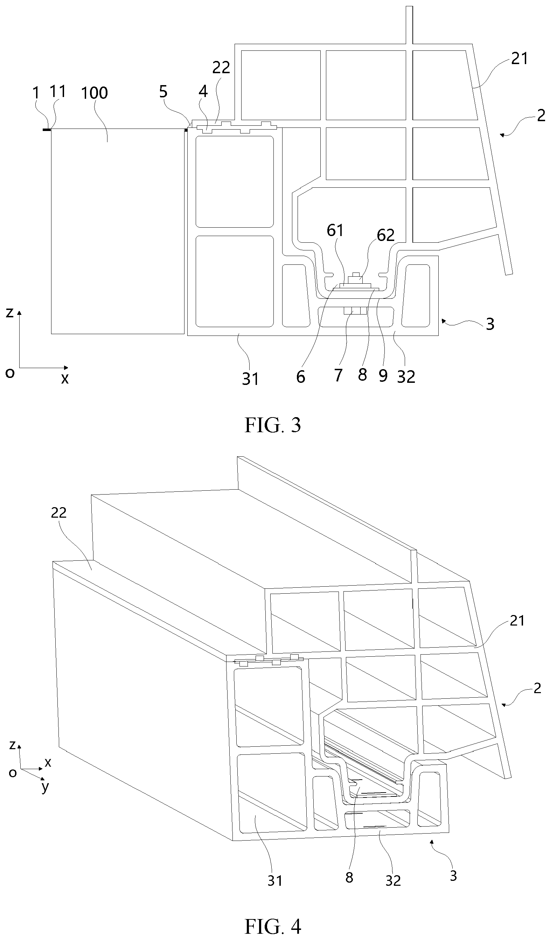

In some embodiments, as shown in FIG. 3, this application provides a body connection assembly, including: a floor panel 1, a rocker rail 2, a mounting side rail 3, and a battery 100.

A conduit 11 is created on the floor panel 1. The rocker rail 2 is located on one side of the floor panel 1 along a first direction x. The rocker rail 2 is configured to be connected to a body. The mounting side rail 3 is connected to a side of the rocker rail 2, the side being close to the floor panel 1. The battery 100 is at least partially located below the floor panel 1 and mounted on a side of the mounting side rail 3 along the first direction x, the side being away from the rocker rail 2. The battery 100 includes a box assembly 101. The box assembly 101 includes an upper box 101A. The upper box 101A closes the conduit 11. The first direction x may be a width direction of the vehicle.

The shape of the conduit 11 may be adapted to the shape of the battery 100. The dimensions of the conduit 11 may also be adapted to the periphery dimensions of the battery 100. In this way, the battery 100 is caused to be located in the conduit 11 so that the conduit 11 can be closed by the upper box 101A of the battery 100 on the one hand. On the other hand, this can reduce the clearance between the battery 100 and the conduit 11, and prevent foreign matters from falling into the mounting space of the battery 100 from the body through the clearance. Amajority of the battery 100 is located below the floor panel 1. The top of the battery 100 may extend into the conduit 11 to close the conduit 11. Atop surface of the battery 100 may be flush with an upper surface of the floor panel 1, lower than the upper surface of the floor panel 1, or higher than the upper surface of the floor panel 1.

The rocker rail 2 is a strip-shaped structure as a whole, and is an important part of the body, and is mounted to a side of the floor panel 1, for example, extends along a front-to-rear direction of the vehicle. The top of the rocker rail 2 may be connected to the body. The mounting side rail 3 is connected to a side of the rocker rail 2, the side being close to the floor panel 1. The mounting side rail is configured to mount the battery 100. The battery 100 is mounted to a side of the mounting side rail 3 along the first direction x, the side being away from the rocker rail 2. In this way, at least a part of the mounting side rail 3 is located between the battery 100 and the rocker rail 2. Both the rocker rail 2 and the mounting side rail 3 may assume a frame structure, thereby not only satisfying the requirement on the structural strength, but also making the body connection assembly lightweight.

The body connection assembly of this embodiment closes the conduit 11 on the floor panel 1 through the top wall of the upper box 101A of the battery 100, and uses the top wall of the upper box 101A as a part of the floor panel 1, thereby reducing the space occupied by the battery in a height direction during mounting of the battery on the basis of ensuring the integrity of the floor panel 1, facilitating mounting of a thicker battery 100, and in turn, increasing the energy density of the battery 100 to increase the endurance time of the vehicle, or, vacating space for other components to be mounted in the vehicle, reducing the difficulty of layout in the vehicle, and making the body connection assembly more lightweight.

In some embodiments, as shown in FIG. 4, both the rocker rail 2 and the mounting side rail 3 extend along a second direction y. The second direction y is perpendicular to the first direction x, and the second direction y may be a length direction of the vehicle.

In such embodiments, the rocker rail 2 is caused to extend along the second direction y, thereby improving the structural stability of the floor panel 1 along a length direction of the vehicle, and in turn, making the vehicle structure more stable. Moreover, the mounting side rail 3 also extends along the second direction y, thereby vacating more space for the battery 100 in the first direction x.

In some embodiments, hermeticity is implemented between a part close to the floor panel 1 on the rocker rail 2 and the mounting side rail 3.

The hermeticity may be implemented in various manners, for example, by applying a sealant or a sealing element. The part close to the floor panel 1 on the rocker rail 2 may be just in hermetic fit with the mounting side rail 3, or may be hermetically connected to the mounting side rail to make the hermeticity more reliable.

This embodiment considers that such a battery mounting method gives rise to a first clearance between the battery 100 and the conduit 11 as well as a second clearance between the part close to the floor panel 1 on the rocker rail 2 and the mounting side rail 3. In this way, impurities, foreign matters, and moisture in the vehicle are prone to pass through the first clearance and the second clearance and reach a side of the mounting side rail 3, the side being away from the battery 100. The hermeticity implemented between the part close to the floor panel 1 on the rocker rail 2 and the mounting side rail 3 can eliminate the second clearance to prevent the impurities or foreign matters in the vehicle from entering the space between the rocker rail 2 and the mounting side rail 3, avoid damage or corrosion to structural members, and increase the lifespan of the vehicle. Moreover, this also prevents the impurities or moisture between the rocker rail 2 and the mounting side rail 3 from entering a mounting region of the battery 100 through the second clearance, thereby improving the reliability and safety of the battery 100 in operation.

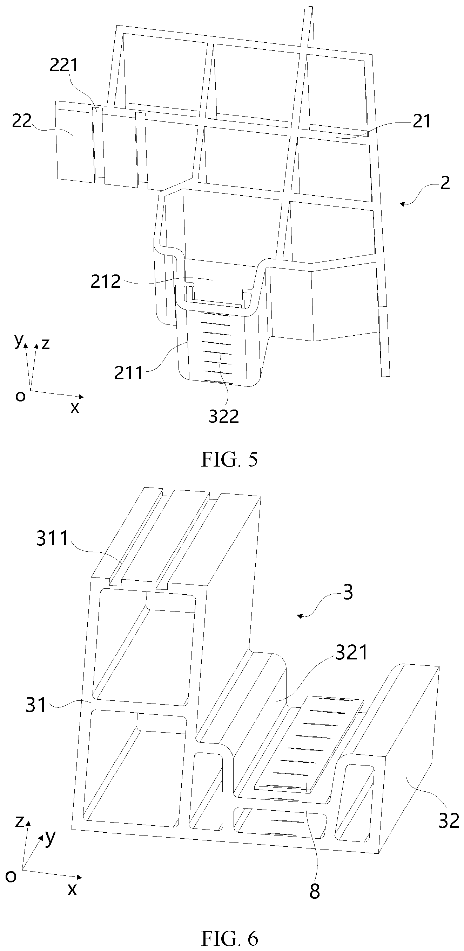

In some embodiments, as shown in FIG. 5, the rocker rail 2 includes a first body portion 21 and a lap-joint portion 22. The lap-joint portion 22 is connected to a side of the first body portion 21 along the first direction x, the side being close to the battery 100. As shown in FIG. 6, the mounting side rail 3 includes a second body portion 31 and an extension portion 32. The extension portion 32 is connected to a side of the first body portion 21 along the first direction x, the side being away from the battery 100. The first body portion 21 is connected to the extension portion 32. The lap joint portion 22 is located above the second body portion 31. Hermeticity is implemented between the lap-joint portion 22 and the second body portion 31.

For example, both the rocker rail 2 and the mounting side rail 3 may be designed as a frame structure in which a plurality of horizontal and/or vertical partition plates are disposed, thereby not only increasing the strength of the frame structure, but also reducing weight. For example, in a cross-section perpendicular to the second direction y, the first body portion 21 may assume a quasi-rectangular structure. The lap-joint portion 22 may be connected to a side of the first body portion 21 along the first direction x, the side being close to the battery 100. The lap-joint portion 22 may assume a plate structure or a combination of a plate structure and a frame structure. In the first direction x, the lap-joint portion 22 may extend until the lap-joint portion is flush with a side of the mounting side rail 3, the side being close to the battery 100; or the lap joint portion may retract by a preset distance. The second body portion 31 may be rectangular, and may be consistent with the battery 100 in height. The extension portion 32 is connected to a side of the second body portion 31 along the first direction x, the side being away from the battery 100. The extension portion is located at a bottom region of the second body portion 31.

In such embodiments, the rocker rail 2 and the mounting side rail 3 are connected together, thereby increasing the overall structural rigidity, mounting the battery 100 more firmly, preventing deformation of the mounting side rail 3 that causes displacement or tilt of the battery 100, and helping to ensure the integrity of the floor panel 1. Moreover, such a connection structure between the rocker rail 2 and the mounting side rail 3 can reduce the space occupied by the rocker rail and the mounting side rail in the first direction x, so as to increase the space available for mounting the battery 100. In addition, the lap-joint portion 22 covers the second body portion 31 so that a support is formed between the lap-joint portion 22 and the second body portion 31 to further increase the overall structural rigidity and prevent deformation of the rocker rail 2 and the mounting side rail 3. In this way, the region above the floor panel 1 in the vehicle can be isolated from the region between the rocker rail 2 and the mounting side rail 3 to prevent foreign matters, impurities, or moisture in the vehicle from entering the body connection assembly.

In some embodiments, the body connection assembly further includes a sealing element 4. The sealing element 4 is disposed between the lap-joint portion 22 and the second body portion 31. That is, the sealing element 4 is disposed in the second clearance between the lap-joint portion 22 and the second body portion 31, and is configured to implement hermeticity between the lap-joint portion 22 and the second body portion 31. For example, the sealing element 4 may be elastic part such as a rubber piece, so as to implement hermeticity through compression in a mounting state.

In such embodiments, a sealing element 4 is disposed between the lap-joint portion 22 and the second body portion 31 to strengthen the hermeticity of the connection between the rocker rail 2 and the mounting side rail 3, and prevent the impurities or foreign matters in the vehicle from entering the space between the rocker rail 2 and the mounting side rail 3, thereby avoiding damage or corrosion to the structural members and increasing the lifespan of the vehicle. Moreover, this also prevents the impurities or moisture between the rocker rail 2 and the mounting side rail 3 from entering a mounting region of the battery 100 through the second clearance, thereby improving the reliability and safety of the battery 100 in operation. In addition, the hermeticity implemented by the sealing element 4 facilitates assembling, ensures a good sealing effect, and ensures consistency of assembling for different body connection assemblies.

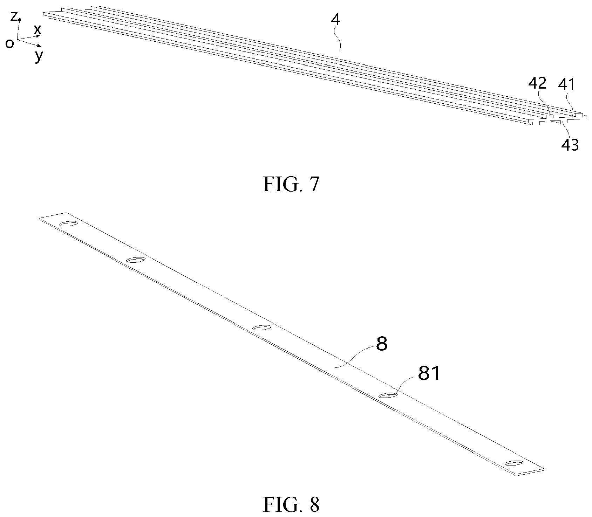

In some embodiments, as shown in FIG. 7, the sealing element 4 includes a sealing plate 41, a first protruding portion 42, and a second protruding portion 43. Both the rocker rail 2 and the mounting side rail 3 extend along a second direction y, and the second direction y is perpendicular to the first direction x. The first protruding portion 42 and the second protruding portion 43 are disposed on two sides of the sealing plate 41 respectively along a third direction z. The third direction z is perpendicular to the first direction x and the second direction y. The third direction z may be a height direction of the vehicle. As shown in FIG. 5 and FIG. 6, a first recessed portion 221 and a second recessed portion 311 are created on a surface of the lap-joint portion 22 and an opposite surface of the second body portion 31 respectively. The first protruding portion 42 is embedded in the first recessed portion 221, and the second protruding portion 43 is embedded in the second recessed portion 311.

In such embodiments, the two sides of the sealing element 4 along the third direction z are in concave-convex fit with the rocker rail 2 and the mounting side rail 3 respectively, thereby increasing a path of sealing between the lap-joint portion 22 and the second body portion 31, and optimizing the sealing effect. Moreover, such a fit structure plays a role of connecting the lap-joint portion 22 and the second body portion 31. When the body connection assembly is subjected to vibration or impact, the concave-convex fit structure between the sealing element 4 and the lap-joint portion 22 and the second body portion 31 can restrict reciprocal displacement between the rocker rail 2 and the mounting side rail 3 along the first direction x, and increase the overall rigidity. In addition, the sealing element 4 can also serve to absorb vibration.

In some embodiments, as shown in FIG. 7, the sealing element 4 includes a plurality of first protruding portions 42 and a plurality of second protruding portions 43. The plurality of first protruding portions 42 are staggered from the plurality of second protruding portions 43 along the first direction x.

For example, the plurality of first protruding portions 42 and the plurality of second protruding portions 43 are disposed alternately along the first direction x.

In such embodiments, a plurality of first protruding portions 42 and a plurality of second protruding portions 43 are disposed for the sealing element, and the plurality of first protruding portions are staggered from the plurality of second protruding portions along the first direction x. In this way, the degree of hermeticity of the sealing element 4 is more uniform along the entire sealing length, and the sealing element 4 is connected to the lap-joint portion 22 and the second body portion 31 more firmly, thereby improving the reliability of the hermetic connection between the rocker rail 2 and the mounting side rail 3.

In some embodiments, an extension direction of the sealing element 4 is consistent with the rocker rail 2 and the mounting side rail 3, and an extension length of the sealing element covers an entire length of a fit between the lap-joint portion 22 and the second body portion 31.

In such embodiments, the extension length of the sealing element 4 along the second direction y is consistent with the length of the fit between the lap-joint portion 22 and the second body portion 31, thereby improving the sealing performance along the entire length of the fit between the rocker rail 2 and the mounting side rail 3, and in turn, ensuring a good overall sealing effect.

In some embodiments, as shown in FIG. 3, the lap joint portion 22 retracts by a preset distance along the first direction x relative to the second body portion 31, and a region of the retraction is coated with a sealant 5 such as a PVC adhesive.

In such embodiments, the region of the retraction of the lap-joint portion 22 relative to the second body portion 31 is coated with a sealant 5, thereby further ensuring airtightness and water-tightness of a joint between the rocker rail 2 and the mounting side rail 3 at a position close to the battery 100. This can reliably prevent the impurities or foreign matters in the vehicle from entering the space between the rocker rail 2 and the mounting side rail 3, avoid damage or corrosion to the structural members, and increase the lifespan of the vehicle. In addition, this also enables the rocker rail 2 to be connected to the mounting side rail 3 at a position close to an end portion, thereby improving the overall connection rigidity.

In some embodiments, the rocker rail 2 includes a first body portion 21 and a lap-joint portion 22. The lap-joint portion 22 is connected to a side of the first body portion 21 along the first direction x, the side being close to the battery 100. The mounting side rail 3 includes a second body portion 31 and an extension portion 32. The extension portion 32 is connected to a side of the second body portion 31 along the first direction x, the side being away from the battery 100. The first body portion 21 is detachably connected to the extension portion 32, for example, by using a fastener or by snap-fastening.

In such embodiments, on the basis of a lap-joint between the lap-joint portion 22 and the second body portion 31, the first body portion 21 is also detachably connected to the extension portion 32, thereby increasing the rigidity of connection between the rocker rail 2 and the mounting side rail 3, increasing the overall bending rigidity and bending modes, and making the body connection structure more resistant to vibration and impact. Moreover, the first body portion 21 is detachably connected to the extension portion 32, thereby facilitating the replacement and maintenance of a single component in the rocker rail 2 and the mounting side rail 3 and facilitating the assembling.

In some embodiments, as shown in FIG. 3, the body connection assembly further includes a nut plate 6 and a plurality of fasteners 7. A cavity 212 is created at a position close to the extension portion 32 on the first body portion 21. The nut plate 6 is disposed in the cavity 212. The nut plate 6 may extend along the second direction y. Both the rocker rail 2 and the mounting side rail 3 extend along a second direction y, and the second direction y is perpendicular to the first direction x. A plurality of mounting holes 322 are created at intervals on both the extension portion 32 and the first body portion 21 along the second direction y. The nut plate 6 includes a plurality of nut interfaces 62 arranged at intervals along the second direction y. The fasteners 7 pass through the mounting holes 322 on the extension portion 32 and the first body portion 21 successively to get connected to the corresponding nut interfaces 62. For example, the fasteners 7 may be screws or bolts or the like.

Optionally, a gasket 8 may be disposed between the nut plate 6 and the first body portion 21. A plurality of through-holes 81 may be created on the gasket 8 at intervals along the second direction y.

For example, the nut plate 6 may include a base plate 61 and a plurality of nut interfaces 62 arranged on the base plate 61 at intervals along the second direction y. The nut interfaces 62 may be columnar structures in which threaded holes are created. The nut interfaces 62 are located on a side of the base plate 61 along the third direction z, the side being away from the extension portion 32. Each fastener 7 may pass through a mounting hole 322 of the extension portion 32, a mounting hole 322 of the first body portion 21, a through hole 81, and a nut interface 62 successively from bottom to top.

In such embodiments, the rocker rail 2 is detachably connected to the mounting side rail 3 by the fasteners 7, thereby improving the convenience of assembling or disassembling, and ensuring high strength of connection between the rocker rail and the mounting side rail.

In some embodiments, as shown in FIG. 3 and FIG. 4, a concave-convex fit structure is disposed between the first body portion 21 and the extension portion 32, and the first body portion and the extension portion are connected together at the concave-convex fit structure. For example, the detachable connection is implemented at the concave-convex fit structure by the fasteners 7.

For example, as shown in FIG. 5, a third protruding portion 211 is disposed on a side of the first body portion 21, the side being oriented toward the extension portion 32. A third recessed portion 321 is created on a side of the extension portion 32, the side being oriented toward the first body portion 21. The third protruding portion 211 is embedded in the third recessed portion 321 to form a concave-convex fit structure.

In such embodiments, a concave-convex fit structure is disposed between the first body portion 21 and the extension portion 32, so that the first body portion 21 is staggered from the extension portion 32, thereby increasing the overall bending rigidity and bending modes after the rocker rail 2 is connected to the mounting side rail 3.

In some embodiments, a bonding layer 9 is disposed at a joint between the first body portion 21 and the extension portion 32. For example, the bonding layer 9 may be a layer structure formed of a viscous substance such as an adhesive, or may be a sealant to improve the sealing effect. For example, the bonding layer 9 may be disposed between the third protruding portion 211 and the third recessed portion 321.

In such embodiments, the bonding layer 9 is disposed at the joint between the first body portion 21 and the extension portion 32, thereby preventing displacement between the rocker rail 2 and the mounting side rail 3 during the mounting of the fasteners 7, improving the reliability of connection between the first body portion 21 and the extension portion 32, and improving the hermeticity of the connection.

Although this application has been described with reference to illustrative embodiments, various improvements may be made to the embodiments without departing from the scope of this application, and the components in this application may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A body connection assembly, comprising:
a floor panel (1), comprising a conduit (11);
a rocker rail (2), located on one side of the floor panel (1) along a first direction (x), wherein the rocker rail (2) is configured to be connected to a body;
a mounting side rail (3), connected to a side of the rocker rail (2), the side being close to the floor panel (1); and
a battery (100), at least partially located below the floor panel (1) and mounted on a side of the mounting side rail (3) along the first direction (x), the side being away from the rocker rail (2), wherein the battery (100) comprises a box assembly (101), the box assembly (101) comprises an upper box (101A), and the upper box (101A) closes the conduit (11).

2. The body connection assembly according to claim 1, wherein both the rocker rail (2) and the mounting side rail (3) extend along a second direction (y), and the second direction (y) is perpendicular to the first direction (x).

3. The body connection assembly according to claim 1 or 2, wherein hermeticity is implemented between a part close to the floor panel (1) on the rocker rail (2) and the mounting side rail (3).

4. The body connection assembly according to claim 3, wherein the rocker rail (2) comprises a first body portion (21) and a lap-joint portion (22), and the lap-joint portion (22) is connected to a side of the first body portion (21) along the first direction (x), the side being close to the battery (100);
the mounting side rail (3) comprises a second body portion (31) and an extension portion (32), and the extension portion (32) is connected to a side of the first body portion (21) along the first direction (x), the side being away from the battery (100); and
the first body portion (21) is connected to the extension portion (32), the lap-joint portion (22) is located above the second body portion (31), and hermeticity is implemented between the lap-joint portion (22) and the second body portion (31).

5. The body connection assembly according to claim 4, further comprising a sealing element (4), wherein the sealing element (4) is disposed between the lap-joint portion (22) and the second body portion (31) and is configured to implement hermeticity between the lap-joint portion (22) and the second body portion (31).

6. The body connection assembly according to claim 5, wherein the sealing element (4) comprises a sealing plate (41), a first protruding portion (42), and a second protruding portion (43); both the rocker rail (2) and the mounting side rail (3) extend along a second direction (y), and the second direction (y) is perpendicular to the first direction (x); and the first protruding portion (42) and the second protruding portion (43) are disposed on two sides of the sealing plate (41) respectively along a third direction (z), and the third direction (z) is perpendicular to the first direction (x) and the second direction (y); and
a first recessed portion (221) and a second recessed portion (311) are created on a surface of the lap-joint portion (22) and an opposite surface of the second body portion (31) respectively, the first protruding portion (42) is embedded in the first recessed portion (221), and the second protruding portion (43) is embedded in the second recessed portion (311).

7. The body connection assembly according to claim 6, wherein the sealing element (4) comprises a plurality of first protruding portions (42) and a plurality of second protruding portions (43), and the plurality of first protruding portions (42) are staggered from the plurality of second protruding portions (43) along the first direction (x).

8. The body connection assembly according to any one of claims 5 to 7, wherein an extension direction of the sealing element (4) is consistent with the rocker rail (2) and the mounting side rail (3), and an extension length of the sealing element covers an entire length of a fit between the lap-joint portion (22) and the second body portion (31).

9. The body connection assembly according to any one of claims 4 to 8, wherein the lap-joint portion (22) retracts by a preset distance along the first direction (x) relative to the second body portion (31), and a region of the retraction is coated with a sealant (5).

10. The body connection assembly according to any one of claims 1 to 9, wherein the rocker rail (2) comprises a first body portion (21) and a lap-joint portion (22); the lap-joint portion (22) is connected to a side of the first body portion (21) along the first direction (x), the side being close to the battery (100); the mounting side rail (3) comprises a second body portion (31) and an extension portion (32); the extension portion (32) is connected to a side of the second body portion (31) along the first direction (x), the side being away from the battery (100); and the first body portion (21) is detachably connected to the extension portion (32).

11. The body connection assembly according to claim 10, further comprising a nut plate (6) and a plurality of fasteners (7), wherein a cavity (212) is created at a position close to the extension portion (32) on the first body portion (21); the nut plate (6) is disposed in the cavity (212); both the rocker rail (2) and the mounting side rail (3) extend along a second direction (y), and the second direction (y) is perpendicular to the first direction (x); a plurality of mounting holes (322) are created at intervals on both the extension portion (32) and the first body portion (21) along the second direction (y); the nut plate (6) comprises a plurality of nut interfaces (62) arranged at intervals along the second direction (y); and the fasteners (7) pass through the mounting holes (322) on the extension portion (32) and the first body portion (21) successively to get connected to the corresponding nut interfaces (62).

12. The body connection assembly according to claim 10 or 11, wherein a concave-convex fit structure is disposed between the first body portion (21) and the extension portion (32), and the first body portion and the extension portion are connected together at the concave-convex fit structure.

13. The body connection assembly according to any one of claims 10 to 12, wherein a bonding layer (9) is disposed at a joint between the first body portion (21) and the extension portion (32).

14. A vehicle (200), comprising: a body and the body connection assembly according to any one of claims 1 to 13, wherein the body is connected to a top of the rocker rail (2).
